# EUROPEAN PATENT APPLICATION

(11) **EP 4 521 262 A1**
(43) Date of publication of application: **12.03.2025**
(21) Application number: 22943498.0
(22) Date of filing: 08.11.2022
(51) Int. Cl.: G06F 16/26

(54) **DATA ASSET GRAPH MANAGEMENT METHOD AND RELATED DEVICE**

(30) Priority: 23.05.2022 CN 202210562551; 08.07.2022 CN 202210800256
(71) Applicant: Huawei Cloud Computing Technologies Co., Ltd., Gui'an New District, Guizhou 550025 (CN)
(72) Inventor: CHEN, Yunpeng, Changsha, Hunan 410075 (CN); ZHAO, Ying, Changsha, Hunan 410075 (CN); LIN, Huiyu, Quanzhou, Fujian 362000 (CN); ZHANG, Jiang, Guizhou 550025 (CN); JI, Zhenfeng, Guizhou 550025 (CN)
(74) Representative: Körber, Martin Hans
(86) International application number: PCT/CN2022/130509
(87) International publication number: WO 2023/226311

(57) **Abstract**

This application provides a data asset graph management method, including: obtaining a data asset graph; determining recommended exploration information for the data asset graph based on the data asset graph; and presenting the recommended exploration information to a user, to guide the user to explore the data asset graph. In this way, a repeated exploration step can be avoided, to reduce repeated or ineffective interaction. The user is guided to select an appropriate node or edge for exploration and analysis, so that time consumed during an exploration process is reduced, redundant information generated in the exploration process is reduced, and exploration and analysis efficiency is improved.

## Description

This application claims priorities to Chinese Patent Application No. 202210562551.1, filed with the China National Intellectual Property Administration on May 23, 2022 and entitled "INTELLIGENT INTERACTIVE NAVIGATION METHOD AND APPARATUS, SERVER, AND STORAGE MEDIUM" and to Chinese Patent Application No. 202210800256.5, filed with the China National Intellectual Property Administration on July 8, 2022 and entitled "DATA ASSET GRAPH MANAGEMENT METHOD AND RELATED DEVICE", both of which are incorporated herein by reference in their entireties.

### TECHNICAL FIELD

This application relates to the computer field, and in particular, to a data asset graph management method and system, a computing device cluster, a computer-readable storage medium, and a computer program product.

### BACKGROUND

With continuous development of computer technologies, various forms of digital assets are generated. The digital asset is a data asset that is owned or controlled by an entity (like an enterprise or an organization) and that can bring future benefits and is recorded in a physical or electronic manner. The data asset may be, for example, a document or electronic data.

There may be various relationships between different asset entities in the data asset. A graph structure formed by using asset entities as nodes and an association relationship between the asset entities as an edge is referred to as a data asset graph. The data asset graph can be displayed in a visualized manner and supports a user in exploration and analysis based on a relationship between data assets. During exploration and analysis, the asset entities and the association relationship between the asset entities are main analysis objects. Based on an interaction function of the data asset graph, the user may continuously switch between perspectives (for example, analysis dimensions) and focuses (for example, analysis objects) to deeply analyze data assets that the user is concerned about and a relationship evolution mode of the data assets.

However, because the foregoing method completely depends on manual exploration, when the user faces a large quantity of nodes and edges, it is difficult to select an appropriate node or edge for exploration and analysis. In addition, when the user selects an inappropriate node or edge, an exploration process may be time-consuming, and a large amount of redundant information is generated. The redundant information increases difficulty in finding useful information, seriously affecting analysis efficiency.

### SUMMARY

This application provides a data asset graph management method. In the method, recommended exploration information is determined, and the recommended exploration information is presented to a user, to guide the user to explore a data asset graph. This avoids blind interaction of click and selection, reduces time consumed during an exploration process, reduces redundant information generated in the exploration process, and improves exploration and analysis efficiency. This application further provides a management system corresponding to the method, a computing device cluster, a computer-readable storage medium, and a computer program product.

According to a first aspect, this application provides a data asset graph management method. The method may be performed by a data asset graph management system. For ease of description, the data asset graph management system may also be referred to as a management system below. The management system may be a software system, and the software system may be deployed on a computing device cluster. The computing device cluster executes program code of the software system, to perform the data asset graph management method in embodiments of this application. In some embodiments, the management system may alternatively be a hardware system having a data asset graph management function. When the hardware system runs, the data asset graph management method in embodiments of this application is performed. For example, the management system may be a computing device cluster having the data asset graph management function.

Specifically, the management system may obtain a data asset graph, then determine, based on the data asset graph, recommended exploration information for the data asset graph, for example, one or more of information such as a recommended exploration start node, a recommended exploration edge, and a recommended exploration target node, and then present the recommended exploration information to a user. The recommended exploration information is used to guide the user to explore the data asset graph.

In this method, under guidance of the recommended exploration information, the user can select an appropriate node or edge (for example, a node corresponding to an important data asset or an edge corresponding to an important association relationship) for exploration and analysis. This reduces time consumed during an exploration process, reduces redundant information generated in the exploration process, and improves exploration and analysis efficiency. In addition, this method can avoid a repeated exploration step, to reduce repeated or ineffective interaction and further improve analysis efficiency.

In some possible implementations, the recommended exploration information includes any one or more of the following:
a recommended exploration start node, a recommended edge, and a recommended exploration target node.

The management system presents the recommended exploration start node to the user, to resolve a "cold start" problem caused by manual exploration, that is, resolve a problem that, when the user faces a "node-edge double heterogeneous network", because the network includes a plurality of types of nodes and a plurality of types of edges, it is difficult to determine a type and an attribute from which analysis starts, and blind filtering and selecting are caused.

The management system presents the recommended exploration edge to the user to resolve a "cold extension" problem caused by manual exploration, that is, resolve a problem that, after an analysis procedure starts, the user needs to explore some association relationships extensively when finding a node of interest, there is a lack of a guidance prompt for a complex association relationship, and this causes blind interaction of click and selection.

The management system presents the recommended exploration target node to the user, to resolve a problem that an exploration start point needs to be manually determined from a large-scale data asset graph and an expected target node needs to be explored through a large quantity of interaction operations. This greatly shortens exploration time and improves exploration efficiency.

In some possible implementations, when a recommendation control on a graph display interface is triggered, the management system may display the recommended exploration start node on the graph display interface; or when the user triggers an edge recommendation operation, the management system may display, to the user, the recommended edge related to a first node selected by the user; or when the user triggers a target recommendation operation, the management system may display the recommended exploration target node to the user. The recommended exploration target node is determined based on a score of a node through which a path on which a second node selected by the user is a start node passes.

In the method, the management system can provide a plurality of atomic interactive navigation functions, and the user can select one or more of the plurality of atomic interactive navigation functions, to meet requirements of different service scenarios.

In some possible implementations, the management system may further display a path from the second node to a third node to the user. The third node is a node selected by the user from the recommended exploration target node. This not only can help the user quickly find an expected data asset (a data asset corresponding to the node selected by the user from the recommended exploration target node), but also can help the user quickly obtain an association relationship between the data asset and another data asset (for example, a data asset corresponding to the exploration start node).

In some possible implementations, the management system may obtain an impact factor of the data asset graph, and determine the recommended exploration information for the data asset graph based on the impact factor. The impact factor may be used to evaluate importance of a node or an edge. Therefore, the recommended exploration information determined based on the impact factor has high reliability and reference value.

In some possible implementations, the impact factor includes a structure feature, a service feature, or historical experience of the user for the data asset graph.

The method comprehensively evaluates importance of the node or the edge in the data asset graph in dimensions such as a structure, a service, and user experience, and therefore has high accuracy.

In some possible implementations, the structure feature includes centrality. The centrality may include, for example, one or more of degree centrality, shortest path betweenness centrality, random walk betweenness centrality, PageRank, closeness centrality, harmonic centrality, and eigenvector centrality. Higher centrality of the node or the edge indicates higher structural importance of the node or the edge in the data asset graph. The management system can recommend, based on structural importance of the node or the edge, a node or an edge that is ranked top, so that the user preferentially explores a node or an edge with higher structural importance, to avoid blind interaction.

The service feature includes one or more of a service weight or a semantic feature. The service weight is a quantitative feature, and the semantic feature is a qualitative feature. It is considered that most data asset graphs are typical node-edge double heterogeneous networks, each type of data asset/association relationship usually has a different service weight. For example, a data table and a job are more important, and accordingly have larger values of service weights. The data asset graph is large in scale, and has a large quantity of data assets of a same type. However, semantic information (represented by semantic features) of the data assets grants different importance degrees to the data assets. For example, a data asset graph includes thousands of data tables that are of a same type and have a same service weight. However, because data included in different data tables has different semantic features and represents different service activities, the different data tables have different service values. Each type of data asset and association relationship in the data asset graph naturally have a service attribute. A greater service weight value of a data asset/association relationship indicates higher service importance of the data asset/association relationship in the data asset graph. The management system recommends, based on the service importance of the node or the edge, the node or the edge that is ranked top, so that the user preferentially explores a node or an edge with higher service importance, to avoid blind interaction.

The historical experience is interactive exploration experience of the user for the data asset graph in a historical period. The user explores the data asset graph based on domain knowledge and accumulated experience of the user with strong tendency and subjectivity. The management system can obtain a statistical indicator for interaction exploration by the user on the data asset graph in the historical period. The statistical indicator can be used as the historical experience of the user for the data asset graph. The statistical indicator may include one or more of a click frequency or a conditional probability. Click frequencies of the data asset and the association relationship indicate a frequency of a user interaction operation, and the click frequencies are positively correlated with empirical importance degrees of the data asset and the association relationship. During exploration on the data asset graph, the user usually selects the data asset and the association relationship consciously and sequentially. A higher conditional probability indicates a higher empirical importance degree of the data asset/association relationship. The management system recommends, based on an empirical importance degree of the node or the edge, the node or the edge that is ranked top, so that the user preferentially explores a node or an edge with a higher empirical importance degree, to avoid blind interaction.

In some possible implementations, the management system may further receive a feedback of the user on the recommended exploration information, and update a recommendation parameter based on the feedback of the user on the recommended exploration information.

In the method, the recommendation parameter is continuously iteratively updated based on the feedback of the user on the recommended exploration information, so that recommendation precision of the management system can be kept at a high level, and accurate recommended exploration information is provided for the user.

In some possible implementations, the feedback of the user on the recommended exploration information includes selection or rejection of the user for the recommended exploration information.

Selection of the user for the recommended exploration information includes selection of the user for a node in a plurality of recommended exploration start nodes, selection of the user for an edge in a plurality of recommended edges, or selection of the user for a node in a plurality of recommended exploration target nodes. Rejection of the user for the recommended exploration information may be selection of the user for a node other than the plurality of recommended exploration start nodes, selection of the user for a recommended edge other than the plurality of recommended edges, or selection of the user for a node other than the plurality of recommended exploration target nodes.

In the method, a positive sample can be obtained based on selection of the user for the recommended exploration information, a negative sample can be obtained based on rejection of the user for the recommended exploration information, and a recommendation parameter is updated using both the positive sample and the negative sample, so that overfitting can be reduced, and an appropriate recommendation parameter can be provided.

In some possible implementations, the management system may receive a keyword input by the user, and then the management system may obtain an intent asset list based on the keyword, display the intent asset list to the user, and then generate, in response to a selection operation performed by the user on an intent asset in the intent asset list, the data asset graph corresponding to the intent asset.

The method supports one-click generation of the data asset graph, and does not require a complex interaction operation. This reduces data asset management difficulty and improves user experience.

In some possible implementations, the management system may receive an extended edge customized by the user, and then the management system may update the data asset graph based on the extended edge.

The method provides a channel for manually updating the data asset graph. The user can customize the extended edge to update the association relationship between data assets in the data asset graph. This method has high availability.

In some possible implementations, the management system may present an extension relationship type to the user. The extension relationship type includes one or more of a parent-child relationship, a primary key-foreign key relationship, a logical physical relationship, and a data flow relationship. The management system may determine the extended edge customized by the user based on a target relationship type selected by the user from the extension relationship type. The extended edge is an edge that uses a node selected by the user as an endpoint and whose relationship type is the target relationship type.

In the method, a plurality of extension relationship types are provided to support the user in flexibly selecting one or more relationship types, and a corresponding extended edge is customized based on the relationship type. This meets a service requirement, the user needs only to perform a simple click-selection operation to customize the extended edge, and user friendliness is high.

In some possible implementations, the management system may identify a type of the intent asset, obtain a first associated asset that belongs to a same type as the intent asset and a second associated asset that belongs to a different type from the intent asset, and generate the data asset graph based on the intent asset, the first associated asset, the second associated asset, an association relationship between the intent asset and the first associated asset, and an association relationship between the intent asset and the second associated asset, where the data asset graph is a node-edge double heterogeneous network graph.

In consideration of a node type and an edge type, the method can not only implement exploration and analysis on a homogeneous network, but also implement exploration and analysis on the node-edge double heterogeneous network graph. In addition, the method has high precision, therefore can be applied to various service scenarios, and has high availability.

According to a second aspect, this application provides a data asset graph management system. The system includes:
an obtaining module, configured to obtain a data asset graph;
a recommendation module, configured to determine recommended exploration information for the data asset graph based on the data asset graph; and
an interaction module, configured to present the recommended exploration information to a user, where the recommended exploration information is used to guide the user to explore the data asset graph.

In some possible implementations, the recommended exploration information includes any one or more of the following:
a recommended exploration start node, a recommended edge, and a recommended exploration target node.

In some possible implementations, the interaction module is specifically configured to:
when a recommendation control on a graph display interface is triggered, display the recommended exploration start node on the graph display interface; or
when the user triggers an edge recommendation operation, display, to the user, the recommended edge related to a first node selected by the user; or
when the user triggers a target recommendation operation, display the recommended exploration target node to the user, where the recommended exploration target node is determined based on a score of a node through which a path on which a second node selected by the user is a start node passes.

In some possible implementations, the interaction module is further configured to:
display a path from the second node to a third node to the user, where the third node is a node selected by the user from the recommended exploration target node.

In some possible implementations, the recommendation module is specifically configured to:
obtain an impact factor of the data asset graph; and
determine the recommended exploration information for the data asset graph based on the impact factor.

In some possible implementations, the impact factor includes a structure feature, a service feature, or historical experience of the user for the data asset graph.

In some possible implementations, the structure feature includes centrality, the service feature includes one or more of a service weight or a semantic feature, and the historical experience includes one or more of a click frequency or a conditional probability.

In some possible implementations, the interaction module is further configured to:
receive a feedback of the user on the recommended exploration information; and
the system further includes:
   an update module, configured to update a recommendation parameter based on the feedback of the user on the recommended exploration information.

In some possible implementations, the feedback of the user on the recommended exploration information includes selection or rejection of the user for the recommended exploration information.

In some possible implementations, the interaction module is further configured to:
receive a keyword input by the user;
the obtaining module is specifically configured to:
   obtain an intent asset list based on the keyword;
   the interaction module is specifically configured to:
      display the intent asset list to the user; and
      the obtaining module is specifically configured to:
         generate, in response to a selection operation performed by the user on an intent asset in the intent asset list, the data asset graph corresponding to the intent asset.

In some possible implementations, the interaction module is further configured to:
receive an extended edge customized by the user; and
the system further includes:
   the update module, configured to update the data asset graph based on the extended edge.

According to a third aspect, this application provides a computing device cluster. The computing device cluster includes at least one computing device, and the at least one computing device includes at least one processor and at least one memory. The at least one processor and the at least one memory communicate with each other. The at least one processor is configured to execute instructions stored in the at least one memory, to enable the computing device or the computing device cluster to perform the data asset graph management method according to any one of the first aspect and the implementations of the first aspect.

According to a fourth aspect, this application provides a computer-readable storage medium. The computer-readable storage medium stores instructions. The instructions indicate a computing device or a computing device cluster to perform the data asset graph management method according to any one of the first aspect and the implementations of the first aspect.

According to a fifth aspect, this application provides a computer program product including instructions. When the computer program product runs on a computing device or a computing device cluster, the computing device or the computing device cluster is enabled to perform the data asset graph management method according to any one of the first aspect and the implementations of the first aspect.

In this application, based on the implementations provided in the foregoing aspects, further combination may be performed to provide more implementations.

### BRIEF DESCRIPTION OF DRAWINGS

To describe the technical methods in embodiments of this application more clearly, the following briefly describes the accompanying drawings for describing embodiments.
FIG. 1 is a diagram of an abstract model of a data asset graph according to an embodiment of this application;
FIG. 2 is a diagram of an architecture of a data asset graph management system according to an embodiment of this application;
FIG. 3 is a flowchart of a data asset graph management method according to an embodiment of this application;
FIG. 4 is a diagram of a graph management interface according to an embodiment of this application;
FIG. 5 is a flowchart of a data asset graph management method according to an embodiment of this application;
FIG. 6A to FIG. 6K are diagrams of graph management interfaces according to an embodiment of this application;
FIG. 7 is a diagram of a structure of a computing device according to an embodiment of this application;
FIG. 8 is a diagram of a structure of a computing device cluster according to an embodiment of this application;
FIG. 9 is a diagram of a structure of a computing device cluster according to an embodiment of this application; and
FIG. 10 is a diagram of a structure of a computing device cluster according to an embodiment of this application.

### DESCRIPTION OF EMBODIMENTS

The terms "first" and "second" in embodiments of this application are merely intended for description, and shall not be understood as an indication or implication of relative importance or an implicit indication of a quantity of indicated technical features. Therefore, a feature limited by "first" or "second" may explicitly or implicitly include one or more features.

First, some technical terms in embodiments of this application are described.

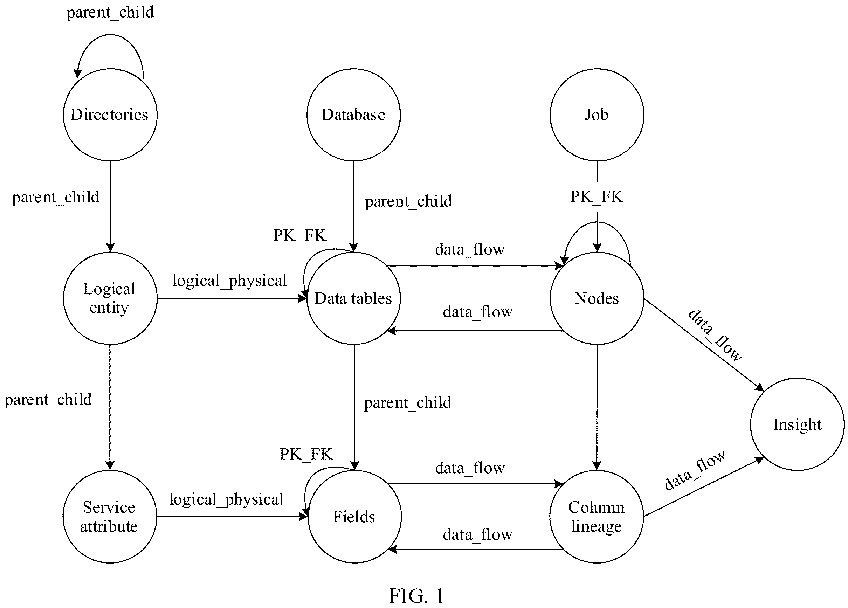

A data asset may include different asset entities, and the different asset entities may have different types of association relationships. A data asset graph can be formed by using asset entities of a data asset as nodes and an association relationship between the asset entities as an edge. Refer to a diagram of an abstract model of a data asset graph shown in FIG. 1. Ten entities and four types of association relationships are defined in the data asset graph. The four types of association relationships may evolve into 18 types of association relationships.

In FIG. 1, a node represents an asset entity, and a unidirectional edge represents a unidirectional association relationship. The asset entity may include a database, data tables, directories, a job, nodes, a logical entity, a service attribute, fields, a column lineage, and an insight. The column lineage is a column-level data lineage (Data Lineage). The data lineage (Data Lineage) is also referred to as a data provenance (Data Provenance) or a data pedigree (Data Pedigree). The data lineage is usually defined as a life cycle, and mainly includes a source of data and a location at which the data moves over time. The association relationship includes four types: a parent-child relationship (denoted as parent_child), a data flow relationship (denoted as data_flow), a primary key-foreign key relationship (primary key-foreign key, denoted as PK_FK), and a logical physical relationship (denoted as logical_physical).

The four types of association relationships may evolve into a parent-child relationship between directories, a parent-child relationship between the directory and the logical entity, a parent-child relationship between the database and the data table, a parent-child relationship between the job and the node, a logical physical relationship between the logical entity and the data table, a primary key-foreign key relationship between data tables, a data flow relationship between the data table and the node, a data flow relationship between the node and the data table, a parent-child relationship between nodes, a data flow relationship between the node and the insight, a parent-child relationship between the logical entity and the service attribute, a logical physical relationship between the service attribute and the field, a primary key-foreign key relationship between fields, a parent-child relationship between the data table and the field, a data flow relationship between the field and the column lineage, a data flow relationship between the column lineage and the field, a data flow relationship between the column lineage and the insight, and a parent-child relationship between the node and the column lineage shown in FIG. 1.

When the data asset graph includes a plurality of types of nodes and a plurality of types of edges, the data asset graph is a node-edge double heterogeneous network graph. The data asset graph shown in FIG. 1 is a typical node-edge double heterogeneous network graph. If all the nodes in the data asset graph are of a same type or all the edges of the data asset graph are of a same type, the data asset graph is a homogeneous network graph.

The data asset graph can be displayed in a visualized manner and supports a user in exploration and analysis based on a relationship between data assets. Currently, the data asset graph is mainly explored manually. The user determines an exploration start node, for example, the user may search for a keyword, then select a data asset from an intent asset list that is obtained through search, and use a node corresponding to an asset entity of the data asset as the exploration start node. Nodes corresponding to all types of asset entities or another type of asset entity associated with the asset entity may be displayed on a display interface of the data asset graph. The user may continue to explore through interaction operations such as selection to complete an expected task.

However, the foregoing method completely depends on manual exploration. When facing a large quantity of nodes and edges, it is difficult for the user to select an appropriate node or edge for exploration and analysis. In addition, when the user selects an inappropriate node or edge, an exploration process may be time-consuming, and a large amount of redundant information is generated. The redundant information increases difficulty in finding useful information, and seriously affects analysis efficiency. In addition, the user is most likely to repeat an exploration step, causing a large quantity of repeated and ineffective interaction and further affecting analysis efficiency.

In view of this, an embodiment of this application provides a data asset graph management method. The method may be performed by a data asset graph management system. For ease of description, the data asset graph management system may also be referred to as a management system below. The management system may be a software system, and the software system may be deployed on a computing device cluster. The computing device cluster executes program code of the software system, to perform the data asset graph management method in embodiments of this application. In some embodiments, the management system may alternatively be a hardware system having a data asset graph management function. When the hardware system runs, the data asset graph management method in embodiments of this application is performed. For example, the management system may be a computing device cluster having the data asset graph management function.

Specifically, the management system may obtain a data asset graph, then determine, based on the data asset graph, recommended exploration information for the data asset graph, for example, one or more of information such as a recommended exploration start node, a recommended exploration edge, and a recommended exploration target node, and then present the recommended exploration information to a user. The recommended exploration information is used to guide the user to explore the data asset graph.

In this method, under guidance of the recommended exploration information, the user can select an appropriate node or edge (for example, a node corresponding to an important data asset or an edge corresponding to an important association relationship) for exploration and analysis. This reduces time consumed during an exploration process, reduces redundant information generated in the exploration process, and improves exploration and analysis efficiency. In addition, this method can avoid a repeated exploration step, to reduce repeated or ineffective interaction and further improve analysis efficiency.

The management system presents the recommended exploration start node to the user, to resolve a "cold start" problem caused by manual exploration, that is, resolve a problem that, when the user faces a "node-edge double heterogeneous network", because the network includes a plurality of types of nodes and a plurality of types of edges, it is difficult to determine a type and an attribute from which analysis starts, and blind filtering and selecting are caused.

The management system presents the recommended exploration edge to the user to resolve a "cold extension" problem caused by manual exploration, that is, to resolve a problem that, after an analysis procedure starts, the user needs to explore some association relationships extensively when finding a node of interest, there is a lack of a guidance prompt for a complex association relationship, and this causes blind interaction of click and selection.

The management system presents the recommended exploration target node to the user, to resolve a problem that an exploration start point needs to be manually determined from a large-scale data asset graph and an expected target node needs to be explored through a large quantity of interaction operations. This greatly shortens exploration time and improves exploration efficiency. For example, a data asset graph administrator of an enterprise receives a task requirement from service personnel. The task is specifically to "Retrieve the data asset graph and find reference data based on a product sales status of the enterprise to support a directional design of a new product of the enterprise". In this application, a node that exists in a current data asset graph may be used as the recommended exploration start node, a recommended exploration target node that corresponds to a high-value data asset and that does not appear in the current graph may be recommended to the user, and a path between the foregoing nodes may be displayed to the user, to help the user effectively reduce exploration time.

To make the technical solutions in this application clearer and easier to understand, the following describes a system architecture in embodiments of this application with reference to the accompanying drawings.

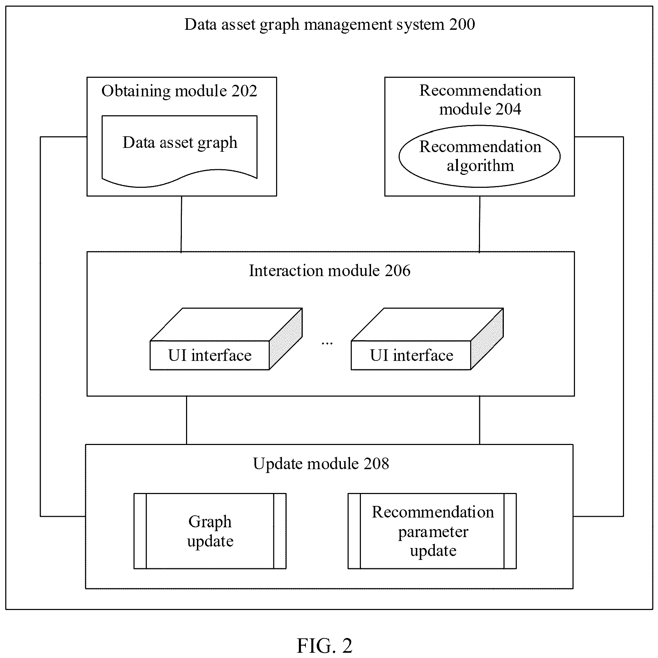

Refer to a diagram of an architecture of a management system shown in FIG. 2. The management system 200 includes an obtaining module 202, a recommendation module 204, and an interaction module 206. The obtaining module 202 and the recommendation module 204 are separately connected to the interaction module 206. The following separately describes the modules.

The obtaining module 202 is configured to obtain a data asset graph. For example, the obtaining module 202 may generate, based on an asset entity selected by a user from an entity list, a data asset graph corresponding to the asset entity. The data asset graph corresponding to the asset entity is specifically a data asset graph that uses the asset entity as a center (for example, a root node).

The recommendation module 204 is configured to determine recommended exploration information for the data asset graph based on the data asset graph. The recommendation module 204 may have a built-in recommendation algorithm. Correspondingly, the recommendation module 204 determines the recommended exploration information for the data asset graph based on the data asset graph and using the recommendation algorithm.

The interaction module 206 is configured to present the recommended exploration information to the user. The recommended exploration information is used to guide the user to explore the data asset graph. Specifically, the interaction module 206 may provide an interaction interface. The interaction interface may also be referred to as a user interface (user interface, UI) interface. The interaction module 206 may present the recommended exploration information to the user through the UI interface. The interaction interface may include a graphical user interface (graphical user interface, GUI) or a command user interface (command user interface, CUI).

The interaction module 206 may provide a plurality of UI interfaces. For example, the interaction module 206 may provide a graph display interface. The interaction module 206 may present the data asset graph to the user through the graph display interface. In addition, the interaction module 206 may directly present the recommended exploration information to the user through the graph display interface. For example, the interaction module 206 may superimpose the recommended exploration information for display on the basis of the data asset graph.

The UI interface provided by the interaction module 206 may further include a search interface. The search interface may include a search box. The user inputs a keyword in the search box to trigger a search operation. In response to the search operation, the obtaining module 202 obtains a data asset that matches the keyword input by the user. The asset is also referred to as an intent asset. The interaction module 206 may display, in a list on the search interface, the data asset obtained through search. The list is used to display the intent asset, and therefore is also referred to as an intent asset list. The user may select a data asset (for example, a target data asset) from the intent asset list. The obtaining module 202 may generate, based on the data asset selected by the user, a data asset graph centered on the data asset. In this way, the interaction module 206 can present the data asset graph to the user through the graph display interface.

It should be noted that the graph display interface and the search interface may alternatively be integrated into one interface. For example, the search interface may be integrated into the graph display interface. The right of the graph display interface is used to display the data asset graph, and the left of the graph display interface is used to display the search box and the intent asset list.

Further, the management system 200 may further include an update module 208. The update module 208 is configured to update the data asset graph, or update a recommendation parameter of the recommendation algorithm. Specifically, the interaction module 206 is further configured to receive a feedback of the user on the recommended exploration information, where the feedback of the user on the recommended exploration information may include selection or rejection of the user for the recommended exploration information. Correspondingly, the update module 208 is configured to update the data asset graph based on the feedback of the user on the recommended exploration information, or the update module 208 is configured to update the recommendation parameter based on the feedback of the user on the recommended exploration information.

It should be noted that the management system 200 shown in FIG. 2 provides a division manner as an example from a perspective of function modularization. In another possible implementation of embodiments of this application, the management system 200 may alternatively include another functional module, or the functional module in FIG. 2 may alternatively be replaced with another functional module. This is not limited in embodiments of this application.

The following describes in detail the data asset graph management method in embodiments of this application from a perspective of the management system 200 with reference to the accompanying drawings.

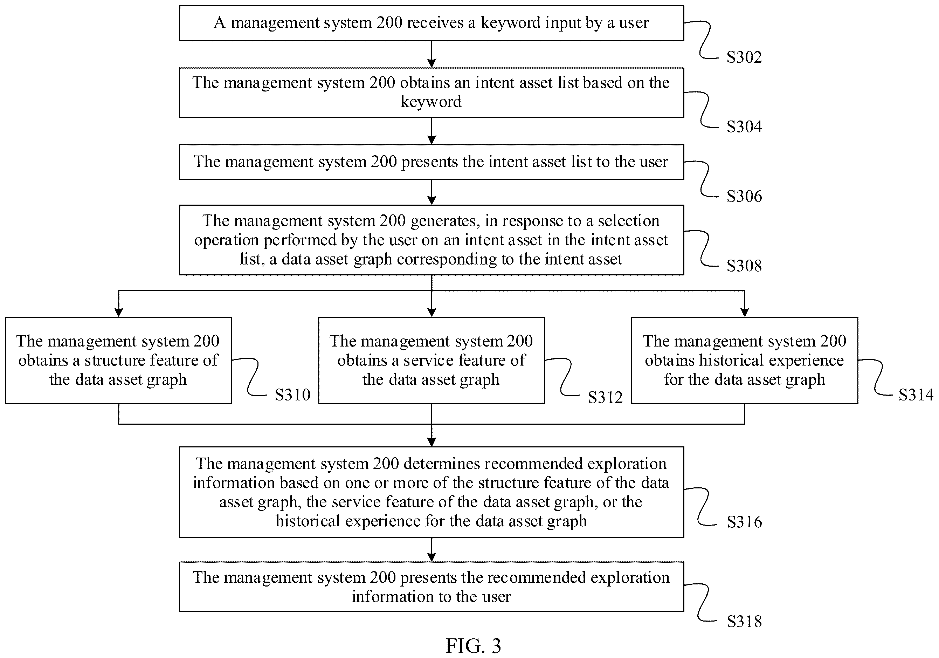

Refer to a flowchart of a data asset graph management method shown in FIG. 3. The method includes the following steps.

S302: A management system 200 receives a keyword input by a user.

The management system 200 provides a search function for a data asset. Specifically, the management system may provide a search interface. The search interface includes a search box, and the user may input the keyword in the search box. In some embodiments, the management system 200 may not provide a separate search interface, but provide a graph display interface integrated with a search box. The search box is integrated into the image display interface, and the user inputs the keyword in the search box on the graph display interface.

The keyword may be input by the user based on a service requirement, that is, the keyword may be related to a service. For example, a sports brand manufacturer produces products such as sports clothing, sports shoes, and sports equipment, and the management system 200 manages various data assets of the sports brand. The user may input a keyword "sports shoes" to trigger to search for a data asset that matches the "sports shoes".

S304: The management system 200 obtains an intent asset list based on the keyword.

The management system 200 searches, based on the keyword, a data asset managed by the management system 200 for a data asset that matches the keyword, and generates the intent asset list based on the data asset that matches the keyword. The intent asset list includes a unique identifier of the data asset (namely, an intent asset) that matches the keyword, and the unique identifier may be an asset name or an ID.

Further, the intent asset list may further include meta information of the data asset that matches the keyword. In some embodiments, the meta information may include one or more of a creator, creation time, or a service type. The meta information may provide a reference for the user to select the data asset from the intent asset list.

S306: The management system 200 presents the intent asset list to the user.

Specifically, the management system 200 may present the intent asset list to the user through the search interface. In some embodiments, the management system 200 may alternatively present the intent asset list to the user through the graph display interface. For example, when the management system 200 integrates the search box on the graph display interface, the management system 200 may present the intent asset list to the user in a local area of the graph display interface, for example, a left area.

For ease of understanding, the following provides descriptions with reference to an example.

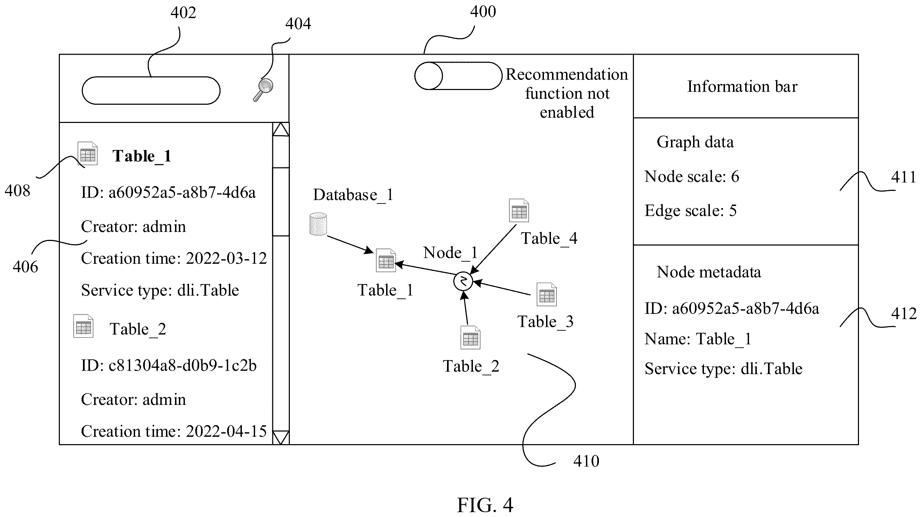

Refer to a diagram of a graph display interface shown in FIG. 4. The graph display interface 400 includes a search box 402 and a search control 404. The user may input the keyword in the search box 402 based on the service requirement, and then trigger the search control 404 through tap, touch, or the like, to trigger a search operation. In response to the search operation performed by the user, the management system 200 displays, in a form of a list, the data asset that matches the keyword, namely, the intent asset, on the left side of the graph display interface 400. In other words, the graph display interface 400 includes an intent asset list 406.

S308: The management system 200 generates, in response to a selection operation performed by the user on the intent asset in the intent asset list, the data asset graph corresponding to the intent asset.

The user may browse the intent asset list to select an asset of interest. When the user selects the intent asset in the intent asset list, the management system 200 may generate the data asset graph corresponding to the intent asset based on the intent asset, an association relationship between the intent asset and another data asset, and the another data asset associated with the intent asset. The data asset graph corresponding to the intent asset may be a data asset graph centered on the intent asset. As shown in FIG. 4, the management system 200 may present, to the user on the graph display interface 400, a data asset graph 410 corresponding to an intent asset 408.

In some possible implementations, the management system 200 may further provide a filtering function, to support conditional filtering on the intent asset list, so as to narrow a range and help the user select the intent asset more quickly. Specifically, the user may perform conditional filtering on the intent asset list based on one or more of an asset type, storage time, and update time, to assist the user in accurately selecting the intent asset 408. The user selects the intent asset 408 in the intent asset list in a manner like a single choice, and the management system 200 may automatically draw a corresponding data asset graph 410 on the right side of the interface.

Further, refer to FIG. 4. The management system 200 may further display meta information 411 of the data asset graph on the graph display interface 400. The meta information 411 of the data asset graph includes one or more of a node scale and an edge scale of the data asset graph. In some possible implementations, the management system 200 may further display meta information 412 of a root node of the data asset graph in an information bar of the graph display interface 400. The cloud information 412 of the root node may include a node name, a node type, or a node ID of the root node.

It should be noted that S302 to S308 are a specific implementation of obtaining the data asset graph by the management system 200 in this embodiment of this application. The data asset graph may alternatively be obtained in another manner by performing the data asset graph management method in this embodiment of this application. For example, the management system 200 may store a data asset graph when generating the data asset graph for the first time. When the user inputs a keyword subsequently, the management system 200 may directly obtain, from the stored data asset graph, a data asset graph corresponding to the keyword.

S310: The management system 200 obtains a structure feature of the data asset graph.

Structure features are some features that are of a geometric figure or space and that can remain unchanged after a shape is changed continuously. The structure feature may be used as an impact factor to determine structure importance of a node and an edge in a graph/network (for example, the data asset graph), to implement intelligent interactive navigation of the data asset graph.

In graph/network research, centrality may be usually used to represent the structure feature of the graph/network. Centrality means a degree to which a node/edge is in a core location in the network. Higher centrality indicates a more important node/edge. There are many common types of centrality, such as degree centrality, betweenness centrality, and closeness centrality, which are specifically as follows:

**Table 1 Basic concepts of centrality**

| Centrality name | Basic concept |
|---|---|
| Degree centrality | A greater node degree indicates greater influence |
| Shortest path betweenness centrality | A larger quantity of times that a shortest path between any two nodes passes through a node i indicates greater centrality of the node i |
| Random walk betweenness centrality | Any two nodes are used as a start point and an end point, and a random walk algorithm is used to select a path. A larger quantity of times that the path passes through a node i indicates greater centrality of the node i. |
| PageRank | More nodes pointing to a node i indicate greater centrality. In addition, greater centrality of the node pointing to the node i indicates greater centrality of the node i. |
| Closeness centrality | The closeness centrality is used to measure closeness between a node and another node. Usually, a sum of distances between the node and the other node is calculated, and then a reciprocal of the sum is solved, to determine closeness centrality |
| Harmonic centrality | Harmonic centrality is a variation of closeness centrality, and is used to resolve a problem of a disconnected graph. Usually, a reciprocal of a distance between a node and another node is calculated, and then the sum is solved for the reciprocal, to determine harmonic centrality. |
| Eigenvector centrality | Greater centrality of a node connected to a node i indicates greater centrality of the node i. |

The degree centrality, the betweenness centrality, the closeness centrality, and the like may all be used to measure the structure feature of the data asset graph, to further implement intelligent interactive navigation of the data asset graph.

The degree centrality is used as an example. The degree centrality means that importance of the node in the network is determined by measuring a degree value of the node. If the degree value of the node is high, the node can directly affect more nodes, the node has greater influence, and structure importance of the node is higher in the data asset graph.

Correspondingly, the management system 200 may sort nodes in a current data asset graph by using degree centrality as a score, and recommend first n1 nodes to the user. The first n1 nodes recommended to the user are also referred to as recommended exploration start nodes. Herein, n1 is a user-defined parameter, and may be configured by the user.

When the user selects a node (representing a data asset) for further exploration, the management system 200 may traverse all potential extended edges of the node selected by the user, calculate, by using degree centrality, importance degrees of data assets corresponding to the potential extended edges, sort the potential extended edges of the selected data asset by using the importance degrees as scores, and recommend first n2 potential extended edges to the user. The first n2 edges recommended to the user are also referred to as recommended edges. Similarly, n2 is a user-defined parameter, and may be controlled by the user.

When the user selects a node (representing a data asset), the management system 200 may alternatively calculate, by using degree centrality, importance degrees of all nodes (representing data assets) that are passed through starting from the node, sort the nodes by using the importance degrees as scores, and recommend the first n3 nodes to the user. The first n3 nodes recommended to the user are also referred to as recommended exploration target nodes. Herein, n3 is a user-defined parameter, and may be configured by the user.

S312: The management system 200 obtains a service feature of the data asset graph.

The data asset graph records data assets included in an enterprise or an organization and an association relationship between the data assets. The data asset graph uses nodes or edges that represent an association relationship to represent service activities in the enterprise or the organization, reflecting strong service relevance. Therefore, the service feature may be used as an impact factor to determine service importance of the node and the edge in the data asset graph, to implement intelligent interactive exploration of the data asset graph.

The service feature may include one or more of a service weight or a semantic feature. The service weight is a quantitative feature, and the semantic feature is a qualitative feature. It is considered that most data asset graphs are typical node-edge double heterogeneous networks, each type of data asset/association relationship usually has a different service weight. For example, a data table and a job are more important, and accordingly have larger values of service weights. The data asset graph is large in scale, and has a large quantity of data assets of a same type. However, semantic information (represented by semantic features) of the data assets grants different importance degrees to the data assets. For example, a data asset graph includes thousands of data tables that are of a same type and have a same service weight. However, because data included in different data tables has different semantic features and represents different service activities, the different data tables have different service values.

For example, the service feature includes the service weight. The data asset graph is closely related to a service of the enterprise. Each type of data asset and association relationship in the data asset graph naturally have a service attribute. A greater service weight value of a data asset/association relationship indicates higher service importance of the data asset/association relationship in the data asset graph.

The management system 200 may comprehensively measure a service weight of a data asset represented by a node in the data asset graph and a service weight of a data asset represented by a node that has an association relationship with the node, sort the nodes in the data asset graph by using the service weights as scores, and recommend the first n1 nodes to the user. The first n1 nodes recommended to the user are the recommended exploration start nodes.

When the user selects a node (representing a data asset) for further exploration, the management system 200 may traverse potential extended edges of the node selected by the user, set an initial service weight based on a type of the edge, and then comprehensively calculate a final service weight of each edge with reference to a service weight of a node corresponding to the edge. The management system 200 may sort the potential extended edges of the node selected by the user by using final service weights as scores, and recommend the first n2 potential extended edges (which can represent an exploratory direction) to the user. The first n2 potential extended edges recommended to the user are the recommended edges.

When the user selects a node (representing a data asset), the management system 200 may alternatively calculate, by using a service weight, service importance of all nodes (representing data assets) that are passed through starting from the node, sort the nodes by using the service importance as scores, and recommend the first n3 nodes to the user. The first n3 nodes recommended to the user are the recommended exploration target nodes.

S314: The management system 200 obtains historical experience of the user for the data asset graph.

The historical experience for the data asset graph is interactive exploration experience of the user for the data asset graph in a historical period. Users of the data asset graph usually have strong domain background knowledge. Interactive exploration experience of these users can be used for reference and guidance. Therefore, the historical experience may be used as an impact factor to determine experience importance of the node and the edge in the data asset graph, to implement intelligent interactive exploration of the data asset graph.

The user explores the data asset graph based on domain knowledge and accumulated experience of the user with strong tendency and subjectivity. The management system 200 can obtain a statistical indicator for interaction exploration by the user on the data asset graph in the historical period. The statistical indicator can be used as historical experience of the user for the data asset graph.

In this embodiment, the statistical indicator may include one or more of a click frequency or a conditional probability. Click frequencies of the data asset and the association relationship indicate a frequency of a user interaction operation, and the click frequencies are positively correlated with empirical importance degrees of the data asset and the association relationship. For example, if a plurality of users all access a data asset, and a value of a click frequency of the data asset is high, it indicates that an empirical importance degree of the data asset is high. The conditional probability is a probability that an event occurs when another event has occurred. During exploration on the data asset graph, the user usually selects the data asset and the association relationship consciously and sequentially. A higher conditional probability indicates a higher empirical importance degree of the data asset/association relationship.

For example, the historical experience includes the click frequency. In exploration on the data asset graph, the users need to have specific professional domain knowledge, which means that each user's exploration experience is valuable and can provide a suggestion for a subsequent user. A higher click frequency of a data asset/association relationship indicates higher empirical importance in the data asset graph.

The management system 200 may calculate click frequencies of the nodes (representing data assets) in the current data asset graph, sort the nodes in the current data asset graph by using the click frequencies as scores, and recommend the first n1 nodes to the user. The first n1 nodes recommended to the user are the recommended exploration start nodes.

When the user selects a node (representing a data asset), the management system 200 may alternatively traverse potential extended edges of the node selected by the user, comprehensively calculate a click frequency of an extension relationship and a click frequency of an associated node, sort the potential extended edges of the node selected by the user by using the click frequencies as scores, and recommend the first n2 potential extended edges to the user. The first n2 potential extended edges recommended to the user are the recommended edges.

When the user selects a node (representing a data asset), the management system 200 may alternatively calculate click frequencies of all nodes (representing data assets) that are passed through starting from the node, sort the nodes by using the click frequencies as scores, and recommend the first n3 nodes to the user. The first n3 nodes recommended to the user are the recommended exploration target nodes.

S316: The management system 200 determines recommended exploration information based on one or more of the structure feature of the data asset graph, the service feature of the data asset graph, or the historical experience for the data asset graph.

The structure feature, the service feature, and the historical experience separately measure importance of the node or the edge in the data asset graph in different dimensions. Based on this, the management system 200 may perform node recommendation and/or edge recommendation by combining a combination of the features in the different dimensions, to determine the recommended exploration information. The management system 200 may alternatively perform node recommendation and/or edge recommendation based on a feature in a single dimension, to determine the recommended exploration information. Node recommendation may include start node recommendation and target node recommendation. Based on this, the recommended exploration information may include one or more of the recommended exploration start node, the recommended edge (which may also be referred to as a recommendation exploration direction), and the recommended exploration target node.

Further, when the management system 200 performs node recommendation or edge recommendation by combining the combination of the features in the different dimensions, recommendation weights may be separately set for the features in the different dimensions. Then, the management system 200 may obtain a recommendation score of the node or the edge through weighting operations, and perform node recommendation or edge recommendation based on the recommendation score of the node or the edge.

S318: The management system 200 presents the recommended exploration information to the user.

Specifically, the management system 200 may present the recommended exploration information to the user through the graph display interface 400. For example, the management system 200 may superimpose the recommended exploration information on the data asset graph, and then present the data asset graph and the recommended exploration information to the user through the graph display interface.

In this way, the management system 200 in this application can implement intelligent interactive navigation oriented to the data asset graph. The management system 200 provides three types of atomic interactive navigation (N1, N2, N3) and three types of impact factors (A1, A2, A3). The atomic interactive navigation is inseparable interactive navigation. N1 indicates important asset navigation (implemented by presenting the recommended exploration start node), N2 indicates important exploration direction navigation (implemented by presenting the recommended edge), and N3 indicates important target asset navigation (implemented by presenting the recommended exploration target node). A1 indicates the structure feature, A2 indicates the service feature, and A3 indicates the historical experience.

Atomic interactive navigation may be flexibly combined into seven forms (N1, N2, N3, N1N2, N2N3, N1N3, N1N2N3), and the impact factors may also be flexibly combined into seven forms (A1, A2, A3, A1A2, A2A3, A1A3, A1A2A3). In this way, the management system 200 in embodiments of this application may cover 7*7 intelligent interactive navigation forms in the data asset graph.

Based on the foregoing content descriptions, according to the data asset graph management method in embodiments of this application, the recommended exploration information may be obtained based on the data asset graph, and the recommended exploration information is used to guide the user to interactively explore the data asset graph. This reduces blindness of interaction, and improves analysis efficiency and exploration experience of the data asset graph. Further, the method provides a plurality of types of atomic interactive navigation, and covers a basic core requirement of the user in data asset exploration. In the method, a plurality of impact factors are further designed. The plurality of impact factors evaluate importance of the node or the edge in different dimensions, so that a navigation result (a recommendation result) is more appropriate. In addition, the method supports flexible combination of the atomic interactive navigation and the impact factors, to obtain rich data asset graph management methods, and can adapt to a changeable data asset graph exploration scenario.

In some possible implementations, the management system 200 further supports the user in choosing whether to enable an intelligent interactive navigation function. When the user chooses to enable the intelligent interactive navigation function, the management system 200 may perform the data asset graph management method shown in FIG. 3.

Further, the intelligent interactive navigation function includes a plurality of types of atomic interactive navigation. The management system 200 may support the user in flexibly configuring the atomic interactive navigation, and the user may use any one or any combination of the plurality of types of atomic interactive navigation. For example, the user may use important asset navigation and exploration direction navigation, to implement exploration and analysis on the data asset graph through a plurality of times of interaction. For another example, the user may use important asset navigation and important target asset navigation, to implement exploration and analysis on the data asset graph through a few times of interaction.

For ease of understanding, the following describes in detail the data asset graph management method in this application by using an example in which the user uses important asset navigation, exploration direction navigation, and important target asset navigation.

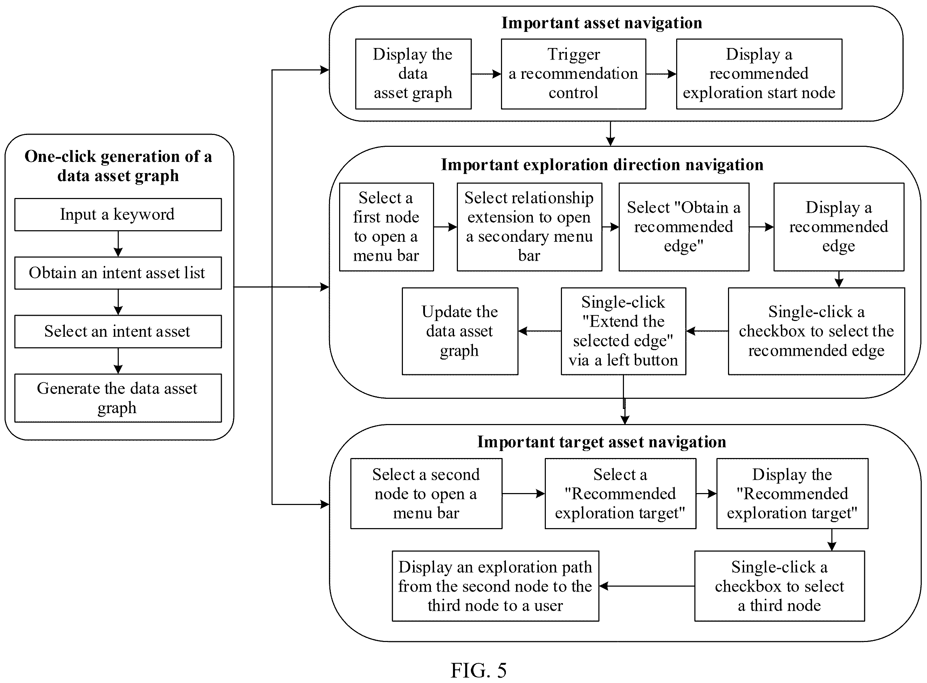

Refer to a flowchart of a data asset graph management method shown in FIG. 5. The method includes the following steps.

Step 1: A management system 200 receives a keyword input by a user, obtains an intent asset list based on the keyword, and generates, based on an intent asset selected by the user from the intent asset list, the data asset graph corresponding to the intent asset.

Specifically, after obtaining the intent asset list, the management system 200 may present the intent asset list to the user. The user may single-click the intent asset via a left mouse button to trigger one-click generation of the data asset graph. The data asset graph is centered on the intent asset selected by the user, and includes the intent asset, an association relationship between the intent asset and another data asset, and another data asset associated with the intent asset.

For a related implementation of presentation by the management system 200 to the user, refer to related content descriptions in the embodiment shown in FIG. 3. Details are not described herein again.

Step 2: The management system 200 presents the data asset graph to the user through a graph display interface. When the user triggers a recommendation control, a recommended exploration start node is displayed on the graph display interface.

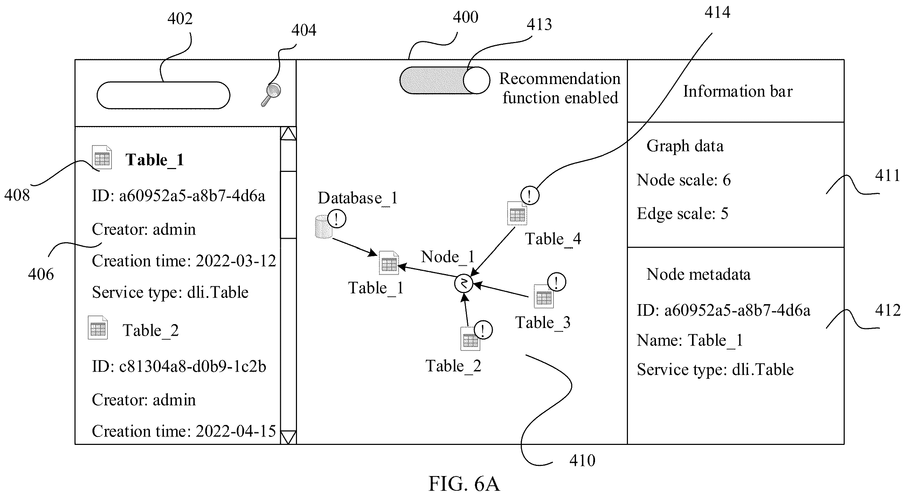

Refer to a diagram of a graph display interface 400 shown in FIG. 6A. The graph display interface 400 carries a recommendation control 413. When the user triggers the recommendation control, the management system 200 may enable an important asset navigation function, specifically, determine a data asset represented by a node in a data asset graph 410, determine a node corresponding to an important data asset on the graph display interface 400, and use the node as a recommended exploration start node for display.

The management system 200 may add, on the graph display interface 400, a recommendation mark 414 for the node corresponding to the important data asset, to identify the node as the recommended exploration start node, so as to remind the user that this type of data asset may be preferentially explored. In this embodiment, the recommendation mark 414 may be a "red exclamation mark", and the management system 200 may uniformly add the recommendation mark 414 to the upper right corner of the node corresponding to the important data asset.

It should be noted that the management system 200 may further set a default state of the recommendation control 413. For example, the default state may be set to a trigger state. In this way, after the user triggers one-click generation of the data asset graph, the management system 200 may directly present the data asset graph 410 to the user on the graph display interface, and present the recommendation mark 414 of the recommended exploration start node to the user, to display the recommended exploration start node to the user.

Step 3: The user selects a first node corresponding to the important data asset to open a menu bar, then selects edge extension in the menu bar, and then selects "Obtain a recommended edge" from a secondary menu bar to trigger an edge recommendation operation. The management system 200 displays, to the user, a recommended edge related to the first node selected by the user.

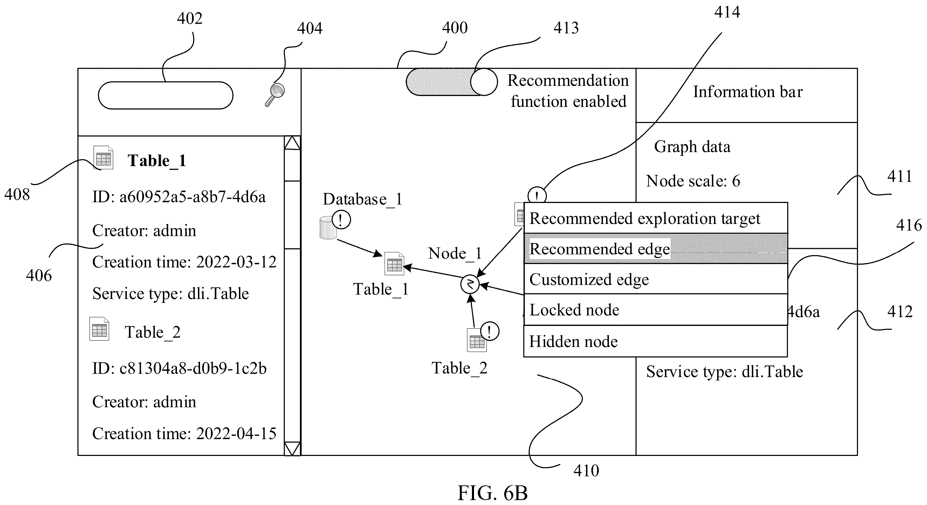

Specifically, the user may select, based on a prompt of recommended exploration information (for example, the recommended exploration start node identified by the recommendation mark 414) on the graph display interface 400, a node corresponding to a data asset (for ease of description, the node is referred to as the first node in this embodiment), and may perform further exploration. As shown in FIG. 6B, the user may single-click and select, via a right mouse button, the first node corresponding to the data asset, and the management system 200 may pop up a menu bar 416.

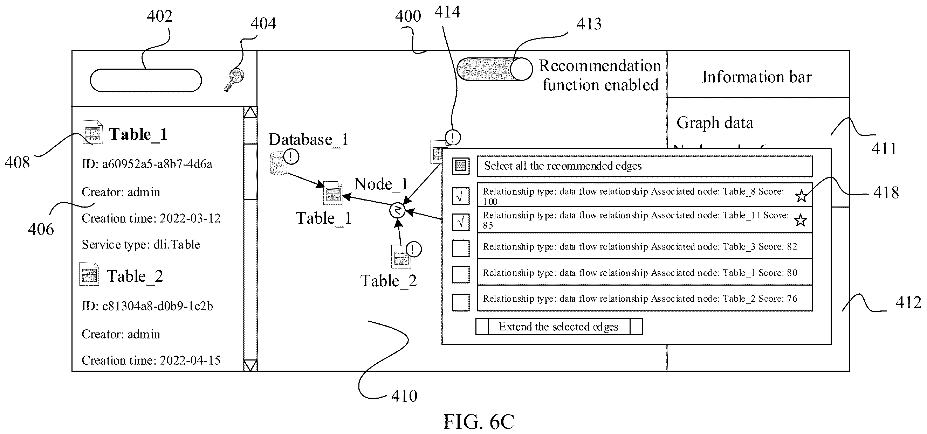

There may be a plurality of manners of extending a relationship of the data asset. If the user does not expect to perform blind extension manually, the user may select "Obtain a recommended extended edge" in the menu bar, and click the item. The management system 200 may automatically obtain a potential extension relationship of the data asset corresponding to the first node, and score potential extension relationships. The management system 200 may sort the potential extension relationships based on scores, and then display the potential extension relationships on the graph display interface 400 in descending order, as shown in FIG. 6C.

The management system 200 may determine, as a recommended edge based on the scores of the potential extension relationships, an edge corresponding to a potential extension relationship that meets a condition, and add a recommendation icon 418 to the potential extension relationship that meets the condition, to display the recommended edge to the user on the graph display interface 400. The potential extension relationship that meets the condition may be one whose score is greater than a preset score or whose score ranks top m, where m is a positive integer. The preset score or m may be set based on an empirical value. For example, the preset score may be set to 85.

All relationships of the data asset are scored through calculation, sorted in descending order, and displayed on the interface. The user may select a relationship with a higher score (for example, the higher score is above 85, and may be automatically recommended and marked with an icon "recommendation" by the system herein) for extension based on a score and a relationship type in a list. Because important exploration direction navigation is used, there is no large amount of redundant information in the data asset graph, and the user can efficiently search for a direction worth exploration based on an initial data asset.

Because exploration direction navigation is used, there is no large amount of redundant information in the data asset graph, and the user can efficiently search for a direction worth exploration by using the recommended edge displayed by the management system 200, to improve exploration and analysis efficiency.

Step 4: The management system 200 updates the data asset graph 410 based on a recommended edge selected by the user.

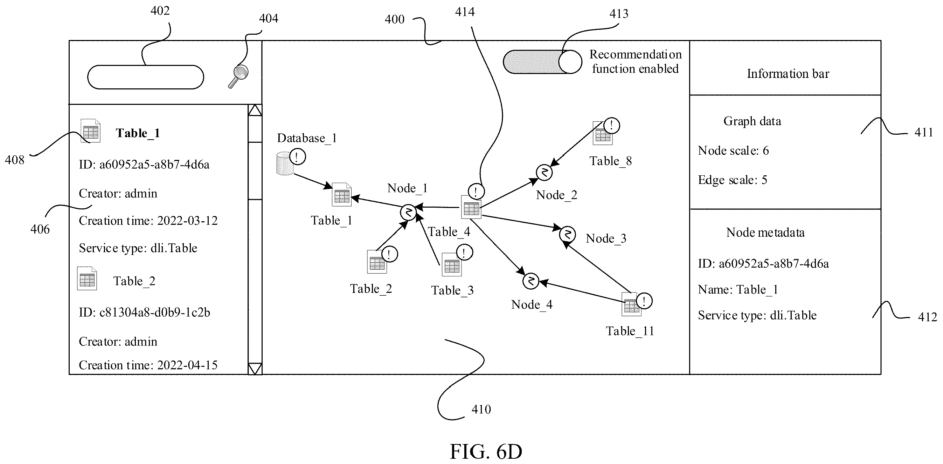

Specifically, after selecting, based on the recommendation icon 418, the recommended edge that the user expects to extend, the user single-clicks "Extend a selected edge" via the left button, to trigger an edge extension operation. In response to the edge extension operation performed by the user, the management system 200 draws, in the data asset graph 410, an edge that represents a corresponding association relationship and a node connected to the edge, to update the data asset graph 410. FIG. 6D shows an updated data asset graph 410. The updated data asset graph 410 includes the recommended edge that is selected by the user and that is extended, and the node connected to the edge.

It should be noted that, in FIG. 6D, an example in which the node connected to the recommended edge is a node that does not appear in the data asset graph 410 is used for description. In some possible implementations, the node connected to the recommended edge may alternatively be a node that appears in the data asset graph 410. This is not limited in embodiments of this application.

The recommended edge selected by the user is a type of feedback of the user on recommended exploration information. Correspondingly, that the management system 200 updates the data asset graph 410 based on the recommended edge selected by the user is an implementation that the management system 200 updates the data asset graph 410 based on the feedback of the user on the recommended exploration information. In another possible implementation of this embodiment of this application, the management system 200 may alternatively update the data asset graph 410 based on another feedback.

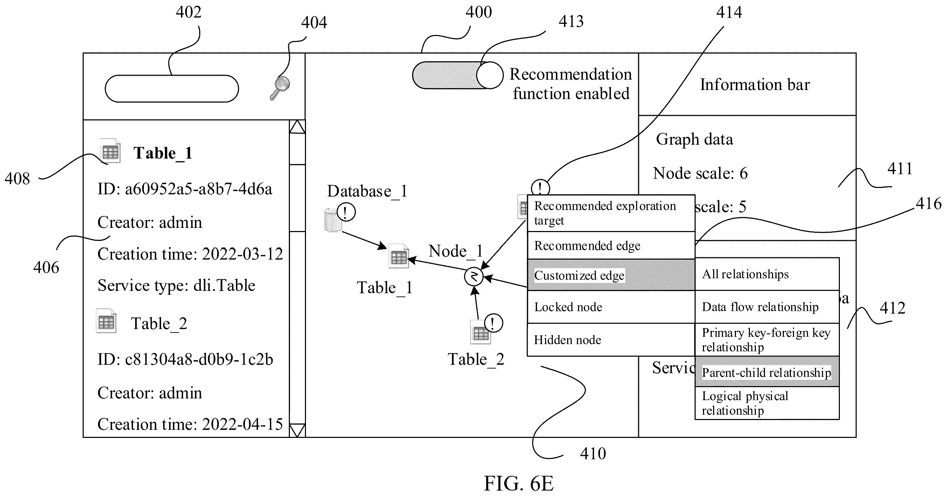

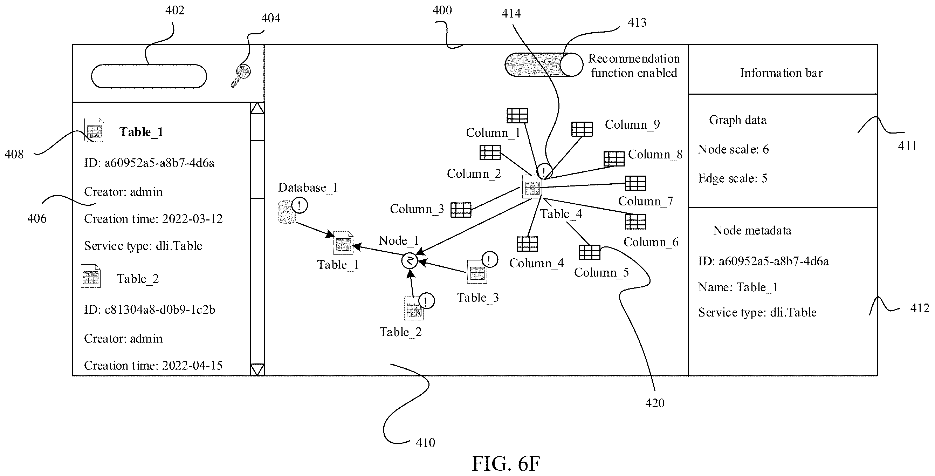

For example, the recommended edge displayed by the management system 200 does not include an edge that the user expects to extend, and the user may alternatively customize an extended edge, to manually extend the association relationship of the data asset. Specifically, the user may single-click and select, via the right mouse button, the first node corresponding to the data asset. In this way, the management system 200 may return to the menu bar 416. Refer to FIG. 6E. The user may select "Customize the extended edge" in the menu bar, and click the item. The management system 200 pops up a secondary menu bar of the item. The secondary menu bar includes different relationship types. The user may select one of the relationship types or select all of the types to customize the extended edge. Refer to FIG. 6F. After the user selects a "Parent-child relationship", at least one edge 420 that uses the first node selected by the user as a start node and whose relationship type is the "Parent-child relationship" is displayed on the graph display interface 400. It can be learned that the management system 200 may alternatively update the data asset graph 410 based on rejection of the user for the recommended exploration information.

Step 5: The user selects a second node corresponding to the important data asset to open the menu bar, and then selects "Recommend the exploration target" from the menu bar to trigger a target recommendation operation. The management system 200 displays a recommended exploration target node to the user.

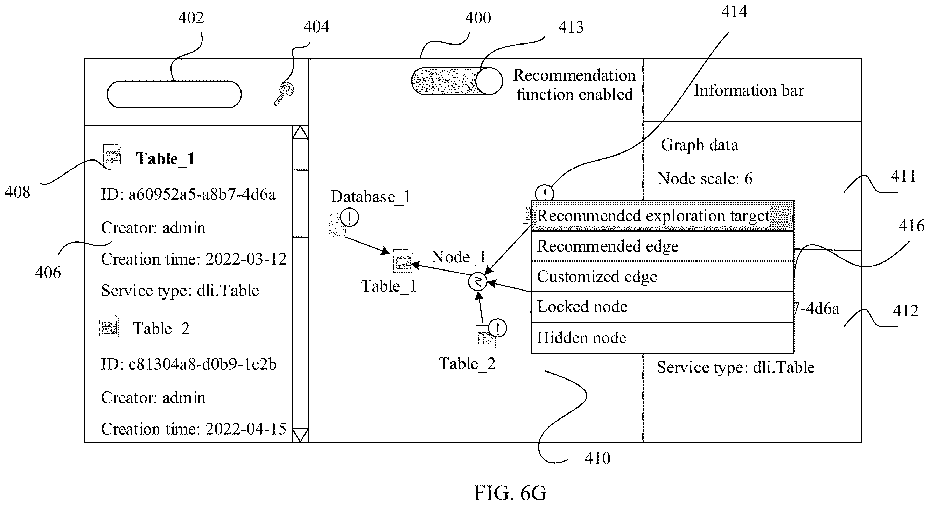

The user selects a node corresponding to an important data asset (for ease of description, the node may be referred to as the second node in embodiments of this application), opens the menu bar, and then performs an operation shown in FIG. 6G to select "Recommend the exploration target". The management system 200 may obtain, based on a path on which the second node selected by the user is a start node, an importance degree of a node that the path passes through, and then the management system 200 may determine, by using the importance degree as a score, the recommended exploration target node from the node that the path passes through.

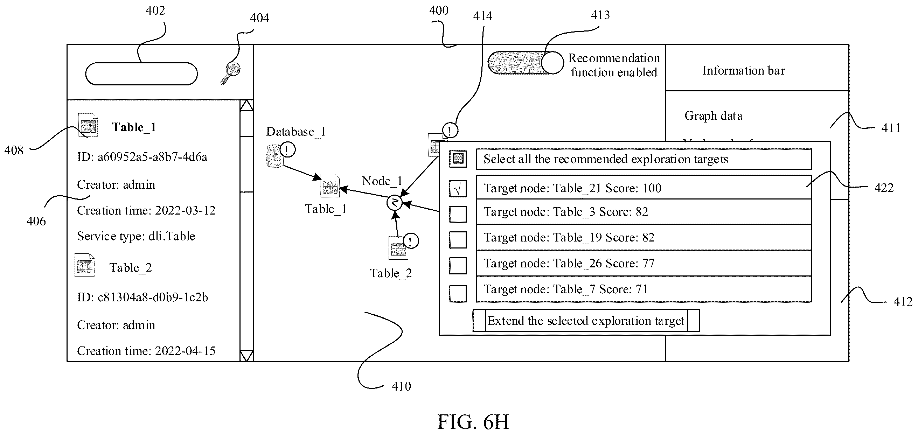

Refer to FIG. 6H. The management system 200 may present, to the user in descending order based on scores, nodes that the path on which the second node selected by the user is the start node passes through. The management system 200 may determine, as the recommended exploration target node, a node whose score meets a condition. As shown in FIG. 6H, the management system 200 may add, on the graph display interface 400, a recommendation mark 422 to the node that meets the condition, to display the recommended exploration target node to the user.

Step 6: The user selects a third node from the recommended exploration target node, and the management system 200 displays a path from the second node to the third node to the user.

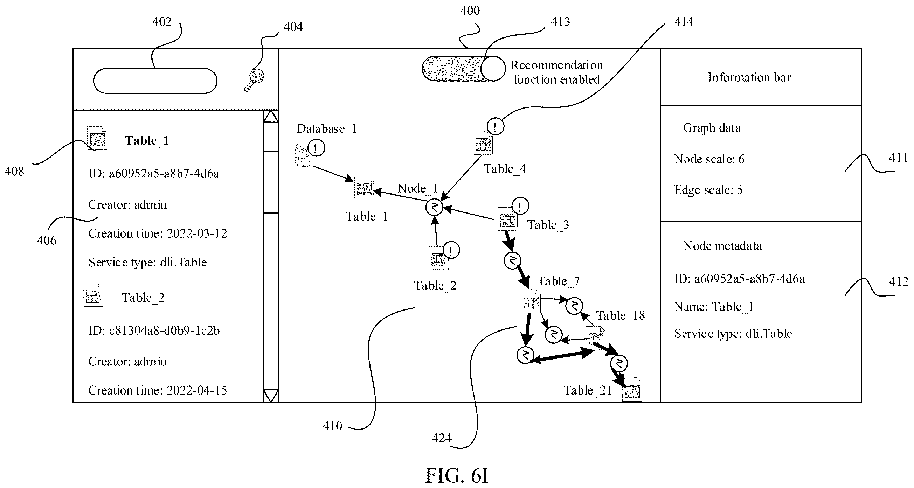

Specifically, refer to FIG. 6H. The user may select a node (for ease of description, the node is referred to as the third node in embodiments of this application) from the recommended exploration target node. In this case, the management system 200 may automatically draw an exploration path in which the second node is used as the start node and the third node selected by the user is used as a target node. Refer to FIG. 6I. The management system 200 may display the exploration path 424 on the graph display interface 400. The management system 200 may display the exploration path 424 in a highlighted manner, to guide the user to quickly obtain an expected target asset.

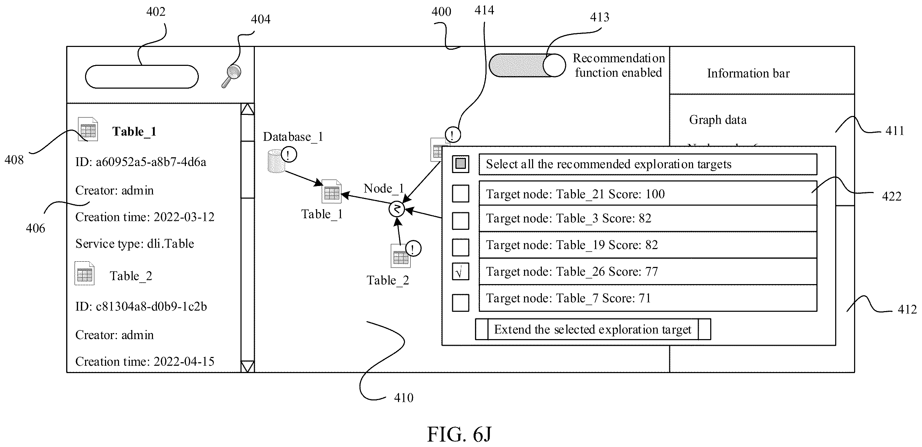

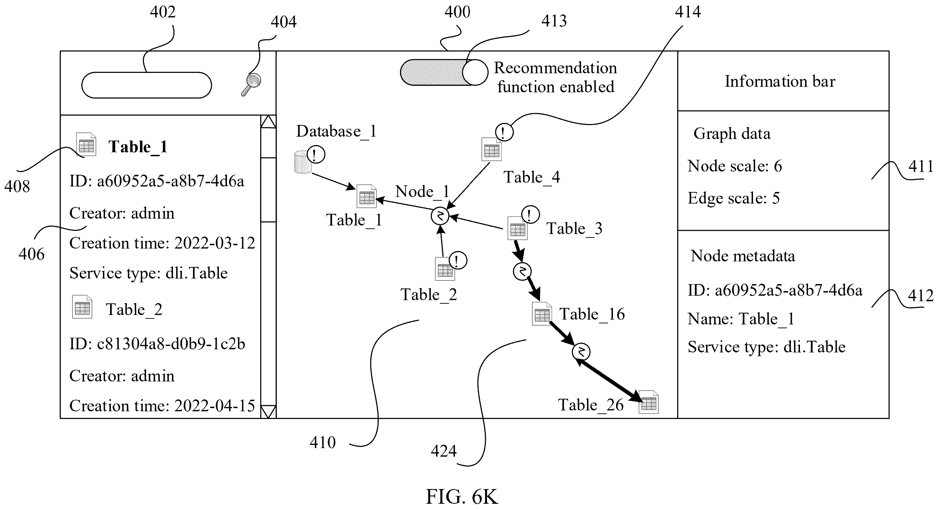

It should be noted that when the user is not satisfied with a recommendation result, the user may freely select another exploration target. Refer to FIG. 6J. The user may select the node other than the recommended exploration target node as a target node for exploration. The management system 200 automatically draws an exploration path from the second node to the target node selected by the user. Then, refer to FIG. 6K. The management system 200 may display the exploration path 424 on the graph display interface 400.

Similar to selection or rejection for the recommended edge, selection or rejection of the user for the recommended exploration target node also belongs to the feedback of the user on the recommended exploration information. The management system 200 may update the data asset graph based on selection or rejection of the user for the recommended exploration target node.

Further, the feedback of the user on the recommended exploration information may be used to update a recommendation parameter of a recommendation algorithm, so that the management system 200 can determine recommended exploration information that better meets a user intention, to improve recommendation precision. For example, when the user refuses the recommended edge and the recommended exploration target node, and selects an extended edge customized by the user, or selects the another exploration target, the management system 200 may adjust a recommendation weight of an impact factor like a structure feature, a service feature, or historical experience based on the extended edge customized by the user or the another exploration target, to improve recommendation precision.

It should be further noted that the second node and the first node that are selected by the user may be a same node or different nodes. In addition, for the same node, the user may choose to perform step 3 and step 4 to enable exploration direction navigation, or choose to perform step 5 and step 6 to enable important target asset navigation, or perform step 3 to step 6 to enable exploration direction navigation and important target asset navigation.

This method provides an intelligent interactive navigation framework oriented to the data asset graph, and based on core requirements (like important data asset exploration, important exploration direction exploration, and important target data asset exploration) of the user in exploration on the data asset graph, provides a plurality of atomic interactive navigation functions to implement intelligent interactive navigation for exploration of the data asset graph, reduce a blind choice of the user, and improve efficiency of exploration and analysis on the data asset graph by the user.

Based on the data asset graph management method in embodiments of this application, an embodiment of this application further provides a data asset graph management system 200 as described above. The following describes the data asset graph management system 200 with reference to the accompanying drawings.

Refer to a diagram of a structure of the data asset graph management system 200 shown in FIG. 2. The system 200 includes:
an obtaining module 202, configured to obtain a data asset graph;
a recommendation module 204, configured to determine recommended exploration information for the data asset graph based on the data asset graph; and
an interaction module 206, configured to present the recommended exploration information to a user, where the recommended exploration information is used to guide the user to explore the data asset graph.

The obtaining module 202, the recommendation module 204, and the interaction module 206 may be implemented by using a hardware module or a software module.

When being implemented by using software, the obtaining module 202, the recommendation module 204, and the interaction module 206 may be an application or an application module that runs on a computing device or a computing device cluster.

When being implemented by using hardware, the obtaining module 202 may include at least one computing device, for example, a server. Alternatively, the obtaining module 202 may be a device implemented by using an application-specific integrated circuit (application-specific integrated circuit, ASIC) or a programmable logic device (programmable logic device, PLD), or the like. The PLD may be a complex programmable logical device (complex programmable logical device, CPLD), a field-programmable gate array (field-programmable gate array, FPGA), a generic array logic (generic array logic, GAL), or any combination thereof. Similarly, the recommendation module 204 may include at least one computing device, or may be a device that is implemented by using an ASIC or a PLD. The interaction module 206 may include a communication interface device, for example, a display.

In some possible implementations, the recommended exploration information includes any one or more of the following:
a recommended exploration start node, a recommended edge, and a recommended exploration target node.

In some possible implementations, the interaction module 206 is specifically configured to:
when a recommendation control on a graph display interface is triggered, display the recommended exploration start node on the graph display interface; or
when the user triggers an edge recommendation operation, display, to the user, the recommended edge related to a first node selected by the user; or
when the user triggers a target recommendation operation, display the recommended exploration target node to the user, where the recommended exploration target node is determined based on a score of a node through which a path on which a second node selected by the user is a start node passes.

In some possible implementations, the interaction module 206 is further configured to:
display a path from the second node to a third node to the user, where the third node is a node selected by the user from the recommended exploration target node.

In some possible implementations, the recommendation module 204 is specifically configured to:
obtain an impact factor of the data asset graph; and
determine the recommended exploration information for the data asset graph based on the impact factor.

In some possible implementations, the impact factor includes a structure feature, a service feature, or historical experience of the user for the data asset graph.

In some possible implementations, the structure feature includes centrality, the service feature includes one or more of a service weight or a semantic feature, and the historical experience includes one or more of a click frequency or a conditional probability.

In some possible implementations, the interaction module 206 is further configured to:
receive a feedback of the user on the recommended exploration information; and
the system 200 further includes:
   an update module 208, configured to update a recommendation parameter based on the feedback of the user on the recommended exploration information.

In some possible implementations, the feedback of the user on the recommended exploration information includes selection or rejection of the user for the recommended exploration information.

In some possible implementations, the interaction module 206 is further configured to:
receive a keyword input by the user;
the obtaining module 202 is specifically configured to:
   obtain an intent asset list based on the keyword;
   the interaction module 206 is specifically configured to:
      display the intent asset list to the user; and
      the obtaining module 202 is specifically configured to:
         generate, in response to a selection operation performed by the user on an intent asset in the intent asset list, the data asset graph corresponding to the intent asset.

In some possible implementations, the interaction module 206 is further configured to:
receive an extended edge customized by the user; and
the system 200 further includes:
   the update module 208, configured to update the data asset graph based on the extended edge.

Similar to the obtaining module 202 and the recommendation module 204, the update module 208 may be implemented by using software or hardware. When the update module 208 is implemented by using the software, the update module 208 may be an application or an application module that runs on a computing device or a computing device cluster. When being implemented by using hardware, the update module 208 may include at least one computing device, for example, a server. Alternatively, the update module 208 may be a device implemented by using an ASIC or a PLD, or the like.

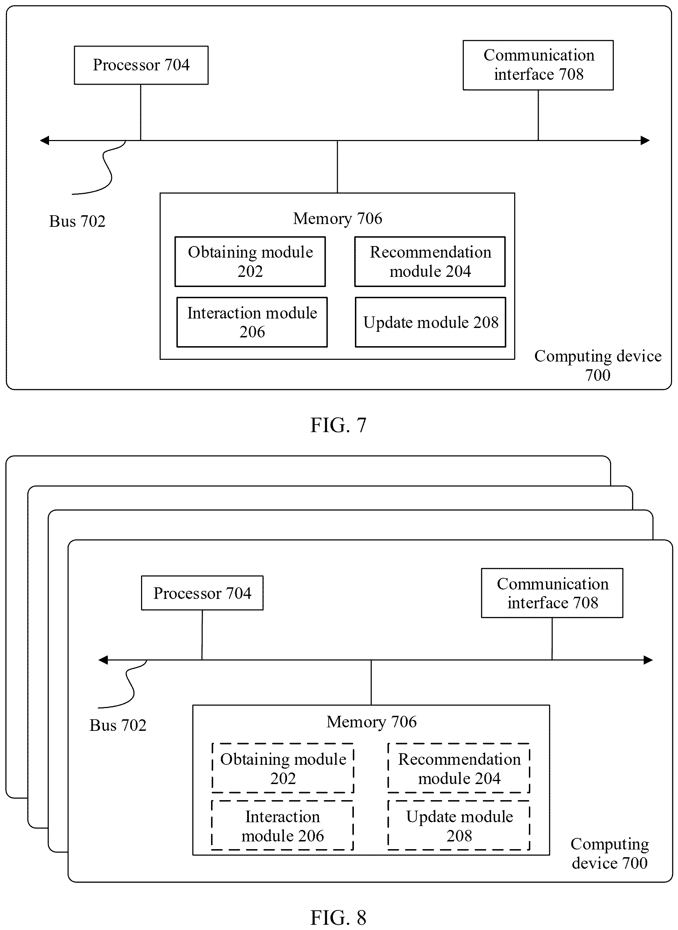

This application further provides a computing device 700. As shown in FIG. 7, the computing device 700 includes a bus 702, a processor 704, a memory 706, and a communication interface 708. The processor 704, the memory 706, and the communication interface 708 communicate with each other through the bus 702. The computing device 700 may be a server or a terminal device. It should be understood that quantities of processors and memories in the computing device 700 are not limited in this application.

The bus 702 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used for representation in FIG. 7, but this does not mean that there is only one bus or only one type of bus. The bus 704 may include a path for transmitting information between components (for example, the memory 706, the processor 704, and the communication interface 708) of the computing device 700.

The processor 704 may include any one or more of processors such as a central processing unit (central processing unit, CPU), a graphics processing unit (graphics processing unit, GPU), a microprocessor (microprocessor, MP), and a digital signal processor (digital signal processor, DSP).

The memory 706 may include a volatile memory (volatile memory), for example, a random access memory (random access memory, RAM). The processor 704 may further include a non-volatile memory (non-volatile memory), for example, a read-only memory (read-only memory, ROM), a flash memory, a hard disk drive (hard disk drive, HDD), or a solid-state drive (solid-state drive, SSD). The memory 706 stores executable program code. The processor 704 executes the executable program code to implement the foregoing data asset graph management method. Specifically, the memory 706 stores instructions that are used by the data asset graph management system 200 to perform the data asset graph management method.

The communication interface 703 uses a transceiver module, for example, but not limited to, a network interface card or a transceiver, to implement communication between the computing device 700 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

As shown in FIG. 8, the computing device cluster includes at least one computing device 700. Memories 706 of one or more computing devices 700 in the computing device cluster may store same instructions used by a data asset graph management system 200 to perform a data asset graph management method.

In some possible implementations, the one or more computing devices 700 in the computing device cluster may alternatively be configured to execute some instructions used by the data asset graph management system 200 to perform the data asset graph management method. In other words, a combination of the one or more computing devices 700 may jointly execute the instructions used by the data asset graph management system to perform the data asset graph management method.

It should be noted that memories 706 in different computing devices 700 in the computing device cluster may store different instructions, to perform some functions of the data asset graph management system.

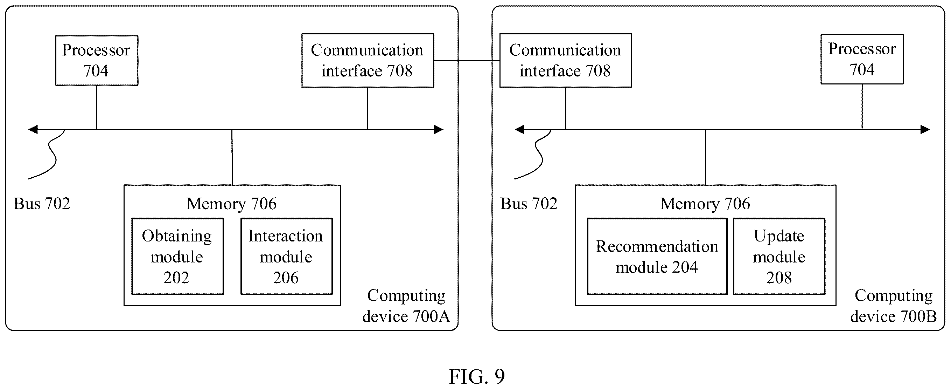

FIG. 9 shows a possible implementation. As shown in FIG. 9, two computing devices 700A and 700B are connected through the communication interface 708. A memory in the computing device 700A stores instructions used to perform functions of an obtaining module 202 and an interaction module 206. A memory in the computing device 700B stores instructions used to perform a function of a recommendation module 204. Further, the memory in the computing device 700B may further store instructions used to perform a function of an update module 208. In other words, the memories 706 of the computing devices 700A and 700B jointly store the instructions for the data asset graph management system to perform the data asset graph management method.

A connection manner between computing device clusters shown in FIG. 9 may be used in view of a case that a data asset graph and recommended exploration information need to be exchanged in the data asset graph management method provided in this application. Therefore, it is considered that functions implemented by the obtaining module 202 and the interaction module 206 are performed by the computing device 700A, and functions implemented by the recommendation module 204 and the update module 208 are performed by the computing device 700B.

It should be understood that functions of the computing device 700A shown in FIG. 9 may alternatively be completed by a plurality of computing devices 700. Similarly, functions of the computing device 700B may alternatively be completed by a plurality of computing devices 700.

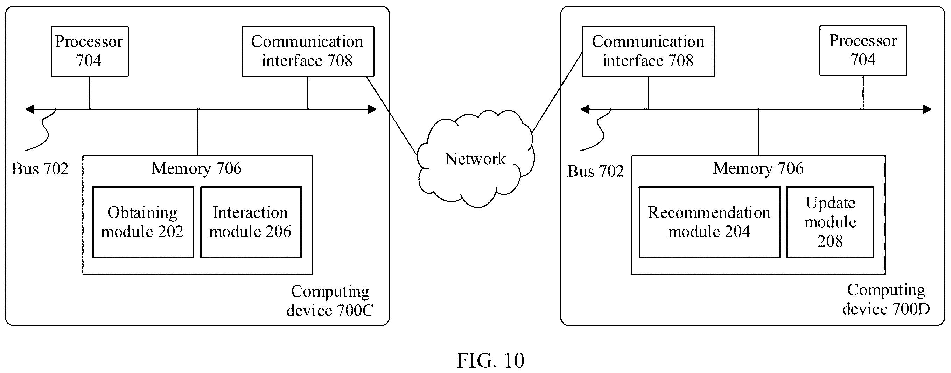

In some possible implementations, the one or more computing devices in the computing device cluster may be connected through a network. The network may be a wide area network, a local area network, or the like. FIG. 10 shows a possible implementation. As shown in FIG. 10, two computing devices 700C and 700D are connected through a network. Specifically, each computing device is connected to the network through a communication interface of the computing device. In this type of possible implementation, a memory 706 in the computing device 700C stores instructions for performing functions of an obtaining module 202 and an interaction module 206. In addition, a memory 706 in the computing device 700D stores instructions for performing functions of a recommendation module 204 and an update module 208.

A connection manner between computing device clusters shown in FIG. 10 may be used in view of a case that a data asset graph and recommended exploration information need to be exchanged in the data asset graph management method provided in this application. Therefore, it is considered that functions implemented by an obtaining module 202 and an interaction module 206 are performed by the computing device 700C, and functions implemented by a recommendation module 204 and an update module 208 are performed by the computing device 700D. It should be understood that functions of the computing device 700C shown in FIG. 10 may alternatively be completed by a plurality of computing devices 700. Similarly, functions of the computing device 700D may alternatively be completed by a plurality of computing devices 700.

An embodiments of this application further provides a computer-readable storage medium. The computer-readable storage medium may be any usable medium that can be stored by a computing device, or a data storage device, for example, a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions indicate the computing device to perform the foregoing data asset graph management method applied to the data asset graph management system.

An embodiment of this application further provides a computer program product including instructions. The computer program product may be a software or program product that includes instructions and that can run on a computing device or be stored in any usable medium. When the computer program product runs on at least one computing device, the at least one computing device is enabled to perform the foregoing data asset graph management method.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of the present invention.

## Claims

1. A data asset graph management method, wherein the method comprises:
obtaining a data asset graph;
determining recommended exploration information for the data asset graph based on the data asset graph; and
presenting the recommended exploration information to a user, wherein the recommended exploration information is used to guide the user to explore the data asset graph.

2. The method according to claim 1, wherein the recommended exploration information comprises any one or more of the following:
a recommended exploration start node, a recommended edge, and a recommended exploration target node.

3. The method according to claim 2, wherein the presenting the recommended exploration information to a user comprises:
when a recommendation control on a graph display interface is triggered, displaying the recommended exploration start node on the graph display interface; or
when the user triggers an edge recommendation operation, displaying, to the user, the recommended edge related to a first node selected by the user; or
when the user triggers a target recommendation operation, displaying the recommended exploration target node to the user, wherein the recommended exploration target node is determined based on a score of a node through which a path on which a second node selected by the user is a start node passes.

4. The method according to claim 3, wherein the method further comprises:
displaying a path from the second node to a third node to the user, wherein the third node is a node selected by the user from the recommended exploration target node.

5. The method according to any one of claims 1 to 4, wherein the determining recommended exploration information for the data asset graph based on the data asset graph comprises:
obtaining an impact factor of the data asset graph; and
determining the recommended exploration information for the data asset graph based on the impact factor.

6. The method according to claim 5, wherein the impact factor comprises a structure feature, a service feature, or historical experience of the user for the data asset graph.

7. The method according to claim 6, wherein the structure feature comprises centrality, the service feature comprises one or more of a service weight or a semantic feature, and the historical experience comprises one or more of a click frequency or a conditional probability.

8. The method according to any one of claims 1 to 7, wherein the method further comprises:
receiving a feedback of the user on the recommended exploration information; and
updating a recommendation parameter based on the feedback of the user on the recommended exploration information.

9. The method according to claim 8, wherein the feedback of the user on the recommended exploration information comprises selection or rejection of the user for the recommended exploration information.

10. The method according to any one of claims 1 to 9, wherein the obtaining a data asset graph comprises:
receiving a keyword input by the user;
obtaining an intent asset list based on the keyword, and displaying the intent asset list to the user; and
generating, in response to a selection operation performed by the user on an intent asset in the intent asset list, the data asset graph corresponding to the intent asset.

11. The method according to any one of claims 1 to 10, wherein the method further comprises:
receiving an extended edge customized by the user; and
updating the data asset graph based on the extended edge.

12. A data asset graph management system, wherein the system comprises:
an obtaining module, configured to obtain a data asset graph;
a recommendation module, configured to determine recommended exploration information for the data asset graph based on the data asset graph; and
an interaction module, configured to present the recommended exploration information to a user, wherein the recommended exploration information is used to guide the user to explore the data asset graph.

13. The system according to claim 12, wherein the recommended exploration information comprises any one or more of the following:
a recommended exploration start node, a recommended edge, and a recommended exploration target node.

14. The system according to claim 13, wherein the interaction module is specifically configured to:
when a recommendation control on a graph display interface is triggered, display the recommended exploration start node on the graph display interface; or
when the user triggers an edge recommendation operation, display, to the user, the recommended edge related to a first node selected by the user; or
when the user triggers a target recommendation operation, display the recommended exploration target node to the user, wherein the recommended exploration target node is determined based on a score of a node through which a path on which a second node selected by the user is a start node passes.

15. The system according to claim 14, wherein the interaction module is further configured to:
display a path from the second node to a third node to the user, wherein the third node is a node selected by the user from the recommended exploration target node.

16. The system according to any one of claims 12 to 15, wherein the recommendation module is specifically configured to:
obtain an impact factor of the data asset graph; and
determine the recommended exploration information for the data asset graph based on the impact factor.

17. The system according to claim 16, wherein the impact factor comprises a structure feature, a service feature, or historical experience of the user for the data asset graph.

18. The system according to claim 17, wherein the structure feature comprises centrality, the service feature comprises one or more of a service weight or a semantic feature, and the historical experience comprises one or more of a click frequency or a conditional probability.

19. The system according to any one of claims 12 to 18, wherein the interaction module is further configured to:
receive a feedback of the user on the recommended exploration information; and
the system further comprises:
an update module, configured to update a recommendation parameter based on the feedback of the user on the recommended exploration information.

20. The system according to claim 19, wherein the feedback of the user on the recommended exploration information comprises selection or rejection of the user for the recommended exploration information.

21. The system according to any one of claims 12 to 20, wherein the interaction module is further configured to:
receive a keyword input by the user;
the obtaining module is specifically configured to:
obtain an intent asset list based on the keyword;
the interaction module is specifically configured to:
display the intent asset list to the user; and
the obtaining module is specifically configured to:
generate, in response to a selection operation performed by the user on an intent asset in the intent asset list, the data asset graph corresponding to the intent asset.

22. The system according to any one of claims 12 to 21, wherein the interaction module is further configured to:
receive an extended edge customized by the user; and
the system further comprises:
the update module, configured to update the data asset graph based on the extended edge.

23. A computing device cluster, wherein the computing device cluster comprises at least one computing device, the at least one computing device comprises at least one processor and at least one memory, the at least one memory stores computer-readable instructions, and the at least one processor executes the computer-readable instructions, to enable the computing device cluster to perform the method according to any one of claims 1 to 11.

24. A computer-readable storage medium, comprising computer-readable instructions, wherein the computer-readable instructions are for implementing the method according to any one of claims 1 to 11.

25. A computer program product, comprising computer-readable instructions, wherein the computer-readable instructions are for implementing the method according to any one of claims 1 to 11.
